# EUROPEAN PATENT SPECIFICATION

(11) **EP 3 782 782 B1**
(45) Date of publication and mention of the grant of the patent: **08.11.2023**
(21) Application number: 19788514.8
(22) Date of filing: 15.04.2019
(51) Int. Cl.: B26D 1/04, B26D 5/20, B26D 7/01, A22C 7/00, B26D 7/06

(54) **AUTOMATED FOOD-CUTTING MACHINE**
AUTOMATISIERTE LEBENSMITTELSCHNEIDMASCHINE
MACHINE AUTOMATISÉE POUR LA COUPE D'ALIMENTS

(30) Priority: 19.04.2018 ES 201830382
(43) Date of publication of application: 24.02.2021
(73) Proprietor: Haratek Importaketa, S.L., 20115 Astigarraga (Gipuzkoa) (ES)
(72) Inventor: GARCÍA VELÁZQUEZ, Antonio, 20115 ASTIGARRAGA (GIPUZKOA) (ES); GARCÍA AZPIAZU, Xabier, 20115 ASTIGARRAGA (GIPUZKOA) (ES); IZAGIRRE IRUSTA, Mikel, 20115 ASTIGARRAGA (GIPUZKOA) (ES); BALENTZIAGA PÉREZ, Miguel, 20115 ASTIGARRAGA (GIPUZKOA) (ES)
(74) Representative: Evens, Paul Jonathan
(86) International application number: PCT/ES2019/070260
(87) International publication number: WO 2019/202189

(56) References cited:
- EP-A2- 0 412 295
- EP-A2- 1 445 078
- US-A- 2 059 595
- US-A- 5 271 304
- US-A1- 2010 263 510
- US-A1- 2014 109 737
- US-A1- 2015 321 372

## Description

### Technical field

The present invention is related to the food industry, and more specifically to the industry dedicated to cutting foods into portions.

### State of the art

Currently, solutions are widely known for cutting food products, or pieces of food, into portions in order to enable them to be handled, packaged, etc. The first of these solutions consists of an operator using the pieces of food to be cut and by means of a knife, a saw or similar they proceed to cut said pieces according to the required portions.

This conventional solution, however, has several disadvantages such as the high risk for the operator to be cut, variable cutting speeds resulting in unpredictable productivity, irregular cutting portions that result in portions being rejected before being sold, etc.

In order to provide improvements in the cutting of food products, the human factor has been reduced over time. Nowadays, machines are known that cut said food products once an operator arranges them in a specific placement and according to a specific position while the cutting operation of the machine is stopped in order to prevent unwanted cuts in the operators and enable the loading of food products to be cut into the corresponding portions.

Once the pieces to be cut, for example in batches of four or half a dozen, are properly placed and arranged, the conventional machines, by means of an interlocking performed in the pieces themselves, secure them and direct them to a cutting point for the successive cutting of the corresponding pieces of food. After cutting the pieces that have been placed, arranged and secured, the cutting operation of the machine is stopped again in order to perform a new loading of the pieces to be cut by an operator by means of the proper placement and arrangement thereof.

Although the human factor has been greatly reduced, it has not yet been completely eliminated in the direct interaction with the machine, and especially with parts close to the cutting elements. In this manner, the safety of the operator has increased although there is still a potential possibility of damage from snags, etc.

Another important disadvantage of conventional machines is that the cutting time thereof is interrupted or conditioned by the time required by the user for the placement and positioning of the pieces to be cut in each of the batches or times. This, at the end of a work day, entails a significant fluctuation in the final productivity in cutting the pieces of food, which complicates and even makes it impossible to summarise the calculation of costs for batches of portions cut monthly in a simple forecast, a fundamental factor nowadays in any productive sector.

In light of the described disadvantage or limitation presented by the currently existing solutions, a solution is necessary that enables a constant productivity of portions of pieces of food, while providing greater safety in the cutting operations of the portions.

US 2015/321372 discloses an automated food cutting machine,comprising:- a cutting element arranged defining a cutting point;- a rotary shaft arranged in order to receive a rotary drive;-a rotary body arranged joined to the rotary shaft in order to rotate together;- a plurality of housings, each housing joined to the rotary body radially spaced with respect to the rotary shaft such that by the rotation of the rotary body it is able to be positioned facing the cutting point;- a cavity defined in each of the housings for housing the products, the cavity being defined with an end opening for the passage of the foods and a longitudinal opening for depositing and removing the food;- a single advance element for all housings, the advance element being arranged in order to move through the cavity so that it is able to be positioned at a starting point and able to be moved to an end point in order to drag the foods towards the end opening;- a control unit configured to moving the advance element between the starting point and the end point.

### Object of the Invention

In order to meet this objective and solve the technical problems discussed, in addition to providing additional advantages that may be derived later, the present invention proposes an automated food cutting machine comprising a cutting element arranged defining a cutting point; a rotary shaft arranged in order to receive a rotary drive; a rotary body arranged joined to the rotary shaft in order to rotate together; at least one housing, prefeferably several housings, joined to the rotary body radially spaced with respect to the rotary shaft such that by the rotation of the rotary body it is able to be positioned facing the cutting point; and a cavity defined in each of the housings for housing the products, the cavity being defined with an end opening for the passage of the foods and a longitudinal opening for depositing and removing the foods.

The automated food cutting machine additionally comprises an advance element for each of the housings, the advance element being arranged in order to move through the cavity so that it is able to be positioned at a starting point in order to receive the foods in the cavity and is able to be moved to an end point in order to drag the foods towards the end opening; feed means for arranging the foods in the housing; and a control unit configured to actuate the feed means with the advance element being at the starting point and moving the advance element between the starting point and the end point.

In this manner, the machine of the invention makes it possible to arrange and cut the food, which is able to be performed in a continuous and automated manner.

The automated food cutting machine additionally comprises a retention element for each of the housings, the retention element being able to be actuated in order to move between a folded position, wherein it is arranged close to the cavity of the housing in order to establish an immobilisation of the food housed in the cavity, and a retracted position, wherein it is arranged less close to the cavity of the housing in order to establish a freedom of movement of the food housed in the cavity.

The automated food cutting machine additionally comprises drive means with a rotary drive shaft and a claw coupling arranged joining one end of the rotary shaft and one end of the rotary drive shaft for transmission of the rotation provided by the drive means to the rotary shaft.

The automated food cutting machine additionally comprises a plate arranged in order to establish an axial stop of the foods housed in the cavities of the housings such that it defines the thickness of the cuts of the food.

Preferably, the plate in correspondence with an angular cutting portion is adjustable in distance with respect to the cutting element such that the thicknesses of the cuts of the foods are selectable.

The advance elements are configured to be movable according to partial movements towards the end point, the partial movements being defined by a resistance to the advance established by the plate.

The rotary shaft has a hollow internal part for receiving a supply of pressurised air. The automated food cutting machine preferably comprises a supply tube for supplying the pressurised air to the hollow internal part of the rotary shaft and a connector for establishing the connection between the rotary shaft and the supply tube, enabling a relative rotation of the rotary shaft with respect to the supply tube.

The automated food cutting machine comprises ducts for supplying the pressurised air from the hollow internal part of the rotary shaft to each of the advance elements in order to be moved between the starting point and the end point.

The automated food cutting machine further comprises feed means configured to receive the foods and be able to be actuated such that they deposit the foods in the cavities of the housings.

The automated food cutting machine additionally comprises sensor means configured to detect the angular movement of the housings with the advance elements at the starting point.

The automated food cutting machine additionally comprises a control unit configured to arrange one of the foods to be cut in the cavity of the housings according to the detection.

The sensor means are configured for another detection of the opposite passage of the housings through the cutting point, the advance elements being at the end point.

The control unit is configured to move the retention elements to the retracted position according to the other detection such that the food able to be housed in the housing is free to come out of the cavity due to the effect of at least gravity.

The automated food cutting machine additionally comprises a securing element for each of the housings between the retention element and the end opening, the securing element being able to be actuated in order to move between a close position, wherein it is arranged close to the cavity of the housing in order to establish an immobilisation of the food housed in the cavity, and a separated position, wherein it is arranged less close to the cavity of the housing in order to establish a freedom of movement of the food housed in the cavity.

### Description of the figures

Figure 1 shows a schematic front perspective view of an automated food cutting machine object of the invention.
Figure 2 shows another schematic front perspective view of the automated food cutting machine object of the invention.
Figure 3 shows a schematic rear perspective view of the automated food cutting machine object of the invention.
Figure 4 shows a schematic front perspective view of the automated food cutting machine object of the invention.
Figures 5A and 5B show schematic views of a cutting element and a housing for housing foods to be cut comprised in the automated food cutting machine object of the invention.

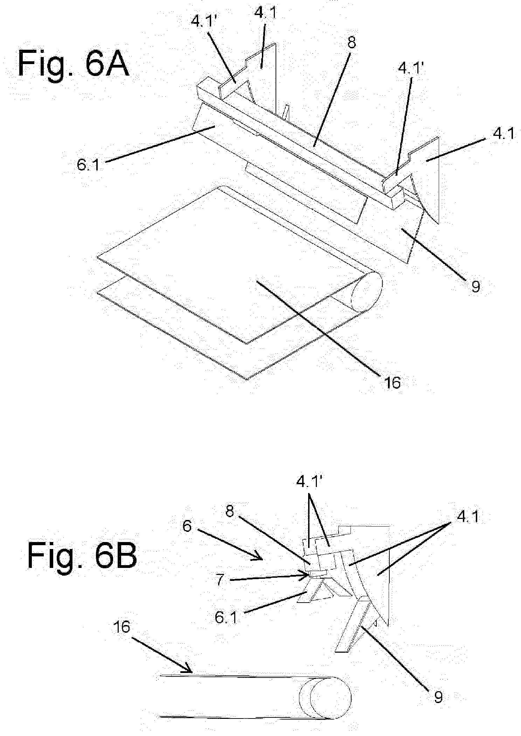

Figures 6A and 6B show schematic views of one of the housings and continuous conveying means comprised in the automated food cutting machine object of the invention.
Figures 7A, 7B and 7C show schematic views of one of the housings, an advance element of the housing being at a movement starting point and a retention element being retracted.
Figures 8A, 8B and 8C show schematic views of one of the housings, the advance element of the housing being at a movement end point and a retention element being retracted.
Figures 9A, 9B and 9C show schematic views of the housing comprised in the automated food cutting machine object of the invention, the advance element of the housing being at the movement starting point and the retention element being folded.
Figures 10A, 10B and 10C show schematic views of one of the housings, the advance element of the housing being at the movement end point and the retention element being folded.
Figures 11A and 11B show schematic views of a loading area of the automated food cutting machine object of the invention, a translation element of the loading area being retracted.
Figures 12A and 12B show schematic views of the loading area of the machine for cutting pieces of food object of the invention, the translation element of the loading area being extended.
Figures 13A and 13B show other schematic perspective views of the automated food cutting machine object of the invention.
Figures 14A and 14B show side schematic views of the automated food cutting machine object of the invention.
Figures 15A and 15B, 16A and 16B, in addition to figures 17A and 17B, show other schematic views of the loading area of the machine for cutting pieces of food object of the invention.
Figures 18A and 18B, in addition to figures 19A and 19B, show other schematic views of one of the housings, one of the advance elements, one of the retention elements and a securing element of the housing.
Figure 20 shows a schematic perspective view of a lower removal area of the automated food cutting machine object of the invention.

### Detailed description of the invention

The present invention relates to an automated food cutting machine. Preferably the foods are foods in a completely or partially frozen state, such that they contain a higher degree of stiffness than in the thawed state. Also, the foods are whole units or partial units of food products, preferably meat and fish. The machine of the invention is, also preferably, for the automated cutting of foods with an elongated configuration.

The automated food cutting machine comprises a cutting module (A). The cutting module (A) in turn comprises a cutting element (1), such as a saw. Preferably the cutting element (1) is a band saw. According to this, the machine of the invention additionally comprises drive means, such as at least one preferably electric motor, and a pair of pulleys (2).

According to this, the drive means are arranged in order to transmit a rotation to one of the pulleys (2), called the drive pulley, both pulleys (2) being partially surrounded by the band saw. In this manner, the rotation of the drive pulley (2) entails the rotary movement of the band saw when the rotation is generated in the other pulley (2) by contact or friction, called the driven pulley. According to this, the band saw is able to be actuated for a continuous rotation surrounding the pulleys (2), and therefore in order to cut in a continuous manner. Thus, the machine of the invention provides a continuous cutting capacity.

The automated food cutting machine additionally comprises a loading module (B). The loading module (B), in turn, comprises a chassis (3) and a rotary body (4), in addition to a rotary shaft (5) firmly joined to the rotary body (4). In this manner, the chassis (3) is configured to rest on a surface while the rotary body (4) is supported by said chassis (3) through the rotary shaft (5).

The rotary body (4) comprises panels (4.1), preferably two, which have dragging projections (4.1'), angularly distributed, projecting radially and externally. The rotary shaft (5) projects with respect to an external face of each of the panels (4.1) such that it is rotatably connectable to the chassis (3). Preferably, said rotary shaft (5) additionally extends inside the rotary body (4) such that it joins the panels (4.1) together on the internal faces thereof, these faces being opposite the external faces.

The cutting module (A) and the loading module (B) are arranged coupled to each other by means of a claw coupling. In this manner, a coupling and a decoupling between both modules (A, B) can be carried out quickly and easily. The claw coupling is jointly arranged on one end of the rotary shaft (5), which is arranged axially facing the cutting module (A), and on one end of a rotary drive shaft (not shown in the figures), which receives a rotational movement by means of the drive means.

In this manner, by means of the claw coupling, the rotation provided by the drive means is transmitted to the rotary shaft (5), and therefore to the panels (4.1). Likewise, the claw coupling provides a predetermined relative positioning between the cutting module (A) and the loading module (B).

Each of the dragging projections (4.1') of one of the panels (4.1) is joined to one of the dragging projections (4.1') of the other panel (4.1) by means of a housing (6). According to this, the loading module (B) comprises one of these housings (6), and more preferably several such as two, four, six or eight in order to increase the capacity of the machine of the invention.

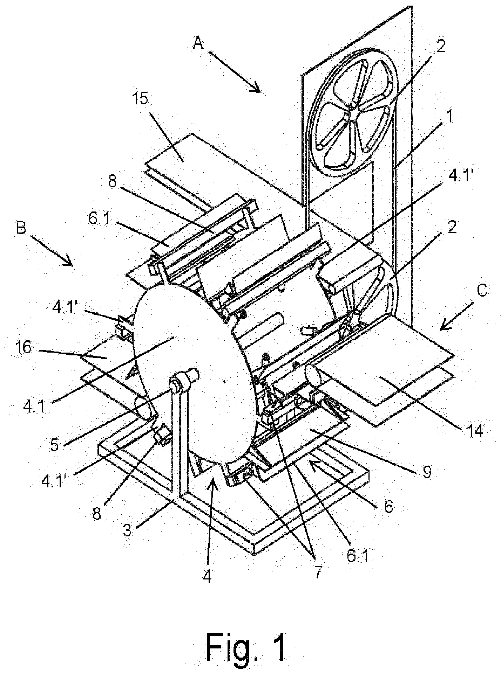

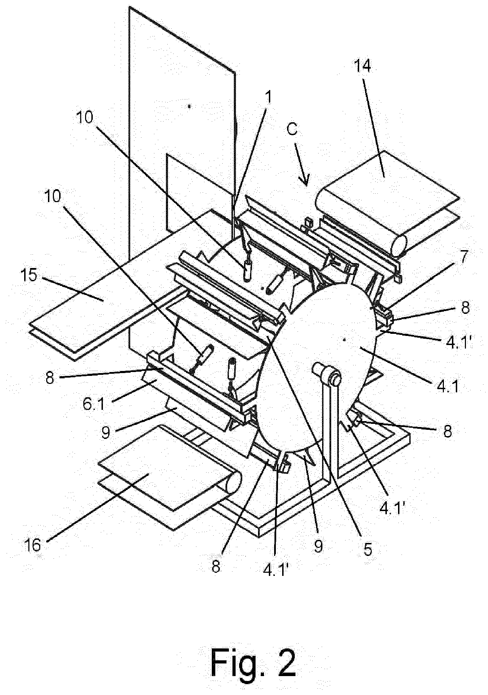

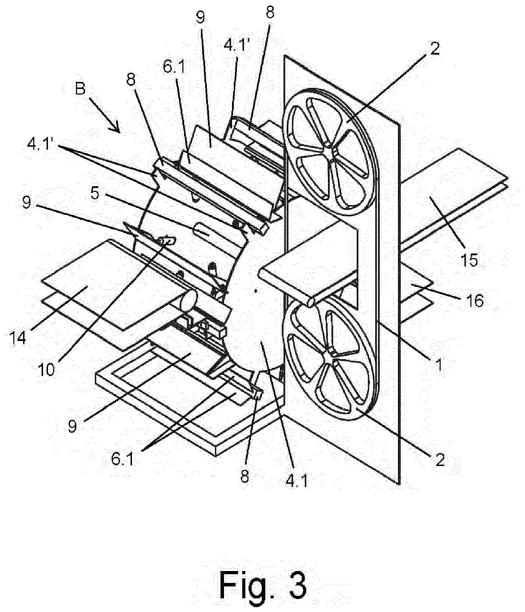

As is directly and unequivocally deducible from, for example, figures 1 to 4, 13A, 14A and 14B, the rotary shaft (5) is extended horizontally, in other words, perpendicular to the direction of gravity and/or parallel with respect to the resting surface of the chassis (3). Likewise, each of the housings (6) is horizontally extended, in other words parallel to the rotary shaft (5).

The cutting element (1), and more specifically the band saw, is located in an outer circular channel of each of the pulleys (2) for the guidance thereof. Preferably, these channels have a depth greater than a thickness corresponding to the cutting element (1) in order to prevent them from accidentally coming out of said channels; in other words, the channels are defined by lateral walls which extend radially and externally to a greater extent than the cutting element (1), said cutting element (1) being arranged in the channels of the pulleys (2).

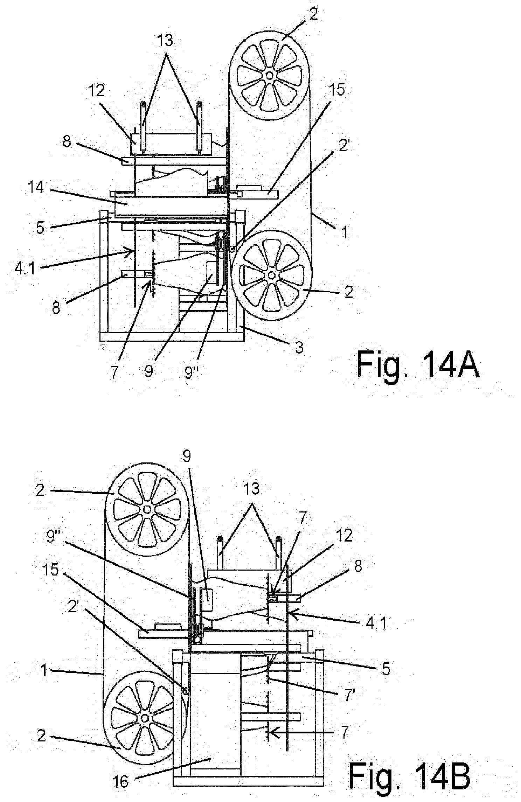

According to this, the drive means are also optionally a contact shaft (2'), as seen for example in figures 14A and 14B. The contact shaft (2') is arranged such that it is contacted by the cutting element (1), a deviation being defined in the trajectory of said cutting element (1) according to the extension thereof between the pulleys (2) along the segment closest to the rotary body (4). In this manner, central rotation points of the pulleys (2) are misaligned with each other according to an imaginary line in the vertical direction. Said verticality is established in accordance with the direction marked by gravity or with the perpendicularity with respect to the resting surface of the chassis (3).

Thus, a separation is provided between the pulley (2) arranged closer to the resting surface of the chassis (3), called the lower pulley, and the panel (4.1) located closer to the cutting module (A), preventing an unwanted contact or friction of said panel (4.1) with said lower pulley (2), and more specifically with the side walls of the corresponding channel.

The machine of the invention comprises a cavity defined in each of the housings (6). The food to be cut is able to be housed in the cavity and is defined with a longitudinal opening for depositing and removing the foods with respect to the cavity. According to this, each of the housings (6) comprises at least one wall (6.1) defining the corresponding cavity. The housings (6) have a longitudinal extension such that the cavity (6) thereof is configured to house the foods extended throughout the same.

The loading module (B) comprises an advance element (7) in each of the housings (6). Each of the advance elements (7) is longitudinally movable through the corresponding housing (6), such that at least one contact part (7') of the advance element (7) is longitudinally movable through the housing cavity (6). According to this, the advance elements (7) are movable between two movement points, a starting point and an end point. In this manner, the food is able to be received in the cavity and movable, preferably by pushing, by means of the advance element (7).

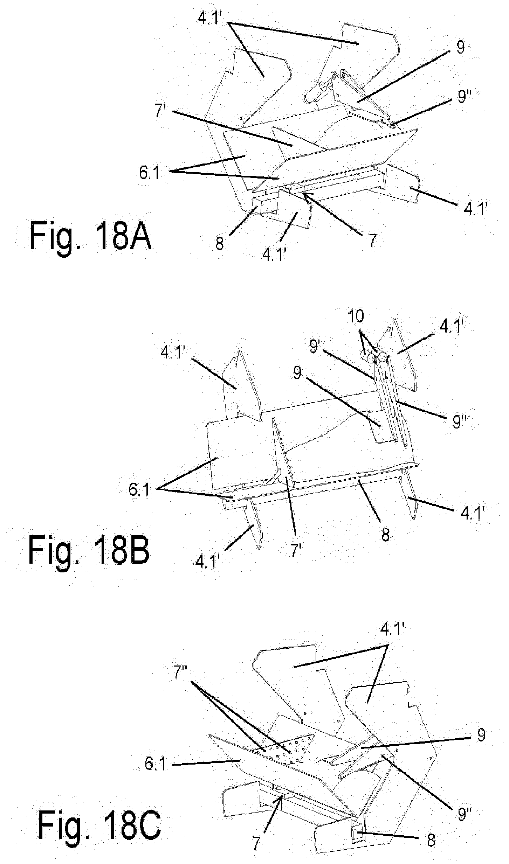

According to this, and as is evident, the contact parts (7') have a contact surface for transmitting the push to the foods. Likewise, the advance elements (7) preferably have projections (7") with a sharp point in correspondence with said contact surfaces in order to exert, by contact, an immobilisation of the foods in correspondence with the housings (6). These projections (7") are visible, for example, in figures 18C, 19B and 20.

The cavities in the housings (6) are additionally defined with an end opening. The advance elements (7) are arranged in order to move such that the foods are able to be housed in the housings (6) being at the starting point and longitudinally movable through the cavities towards the end openings. The movement of the advance elements (7) towards the end opening corresponds to the movement towards the end point.

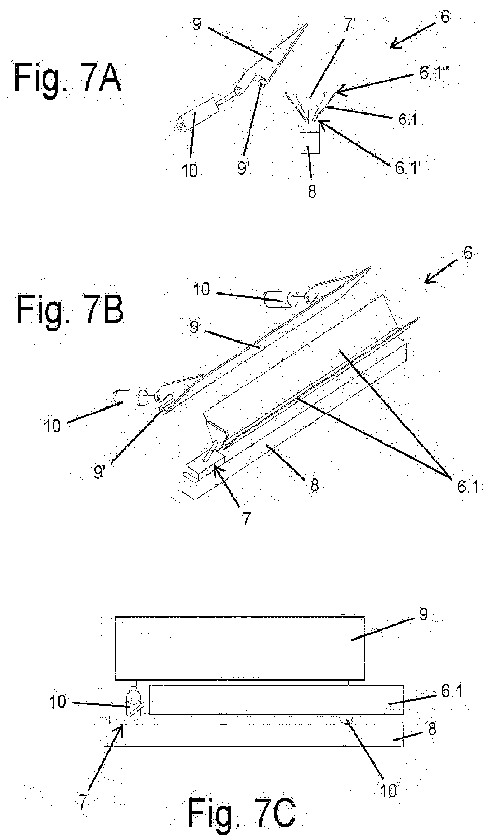

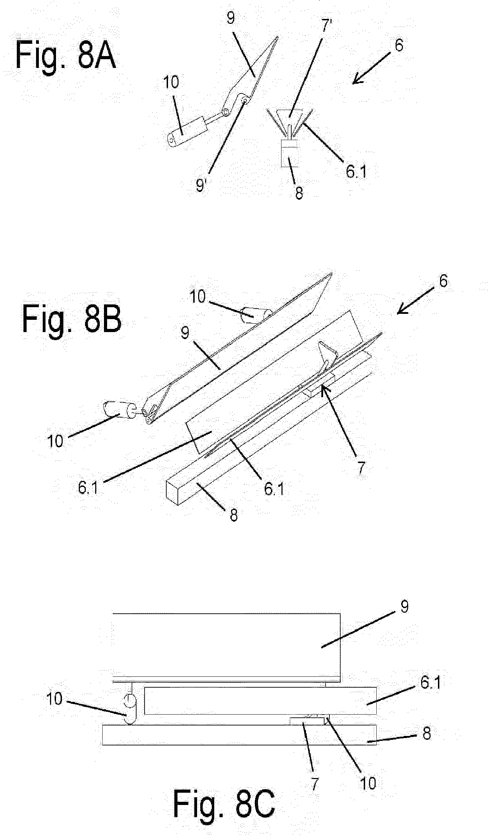

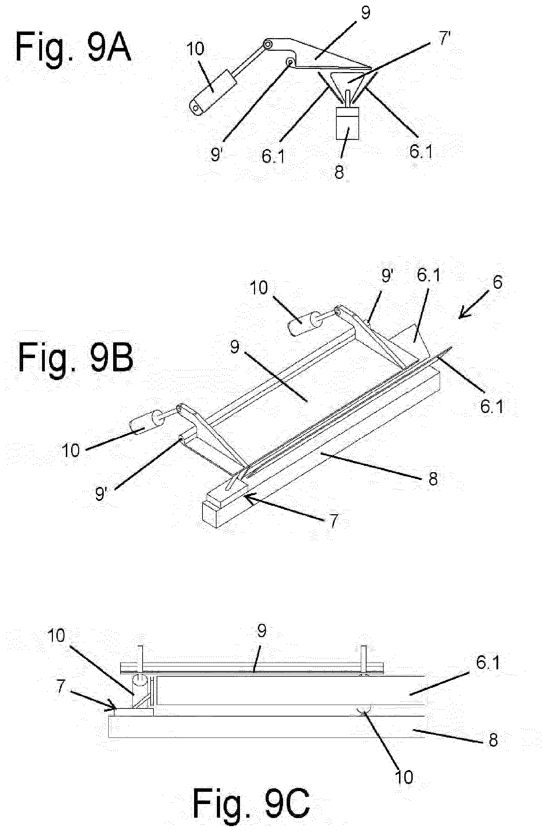

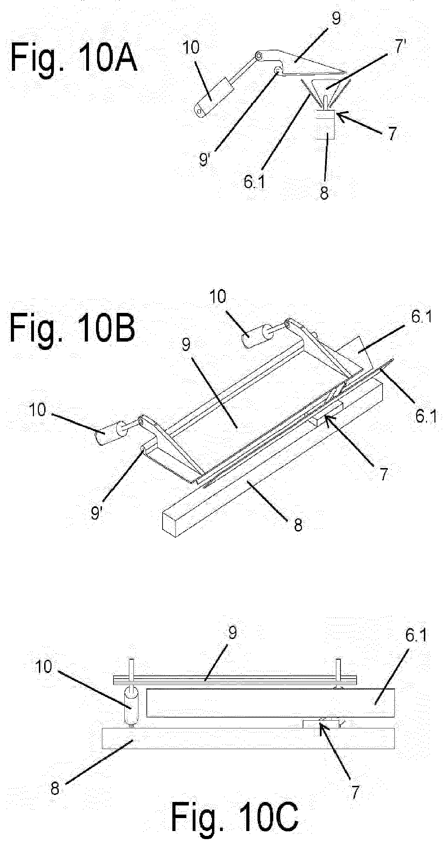

In this manner, each of the housings (6) comprises a rail (8) along which the corresponding advance element (7) is longitudinally movable between the starting point and the end point. The rails (8) are the element of the housings (6) which are physically joining one of the dragging projections (4.1') of one of the panels (4.1) to one of the dragging projections (4.1') of the other panel (4.1). In figures 7B and 9B, for example, the advance element (7) is visible on the corresponding rail (8) according to the starting point. In figures 8B and 10B, for example, the advance element (7) is visible on the corresponding rail (8) according to the end point.

According to an exemplary embodiment, and in accordance with what has been described, there are two walls (6.1) comprised in the housings (6) defining the cavities. Said walls (6.1) of each of the housings (6) are extended such that first longitudinal edges (6.1') are closer to each other than second longitudinal edges (6.1") of both walls (6.1) to each other. In this manner, the second longitudinal edges (6.1") are spaced from each other defining the longitudinal opening of the cavity, while the first longitudinal edges (6.1') are spaced from each other defining a longitudinal through slot of the cavity.

In this manner, the advance elements (7) are movable along the rails (8) being partially housed in the cavities when they are arranged through the longitudinal through slots of the housings (6). These longitudinal through slots are sized enabling the movement of the advance elements (7) along the rails (8), the advance elements (7) being through said slots such that the contact parts (7') of the advance elements (7) are located in the cavities, while they prevent the outlet or the passage of the foods through them.

In correspondence with the housings (6), the loading module (B) additionally comprises a retention element (9) configured to retain the foods deposited in the cavities. According to this, the retention elements (9) are movable between two positions, a retracted position and a folded position. According to this, the retention elements (9) preferably have at least one fastening point (9') in order to be arranged fastened on the rotary body (4) with the possibility of relative rotation between each other.

The retracted position corresponds to a positioning of the retention elements (9) such that they are distanced or spaced with respect to the longitudinal opening of the cavities. In this manner, the corresponding food is free to be housed through the longitudinal opening of the cavity, removed through said longitudinal opening or moved longitudinally through the cavity towards the open end. According to the exemplary embodiment shown in the figures, said retracted position is visible, for example, in figures 7A and 8A.

The folded position corresponds to a positioning of the retention elements (9) such that they are near or close to the longitudinal opening of the cavities, in other words closer or nearer than in the case of the retracted position. In this manner, this prevents the food from being deposited in the corresponding cavity through the longitudinal opening thereof, the removal of the corresponding food product from the cavity through said longitudinal opening or the longitudinal movement of the food through the cavity towards the open end. According to the exemplary embodiment shown in the figures, said folded position is visible, for example, in figures 9A and 10A.

The retention elements (9) are configured to keep the foods immobile in the cavities of the housings (6). Preferably, the retention elements (9) are configured to exert a push against the food such that said food is subjected to compression together with the corresponding walls (6.1).

According to this, each of the housings (6) comprised in the loading module (B) additionally comprises at least one cylinder (10), preferably pneumatic. One end of the cylinders (10) is arranged joined to the rotary body (4), preferably to one of the panels (4.1), and another end of the cylinders (10) is arranged joined to the retention elements (9). Thus, the retention elements (9) are moved between the retracted position and the folded position by means of the extension and retraction of the cylinders (10).

According to the example represented in the figures, the machine of the invention has both the cylinders (10) and the retention elements (9) joined to the panels (4.1). Specifically, and in order to provide a firm and balanced securing and movement, each of the retention elements (9) has two fastening points (9'), each one for fastening to one of the two panels (4.1), while there are two cylinders (10), both preferably pneumatic, comprised in each of the housings (6), the corresponding end of each of said two cylinders (10) being joined to one of the two panels (4.1).

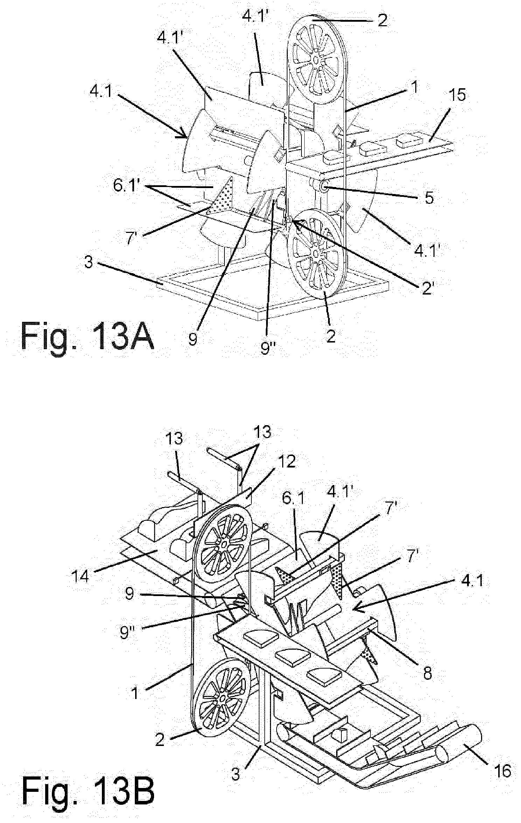

Alternatively, according to the example specifically represented for example in figures 13A, 15A, 16A, 17A, 18A, 18B, 19A and 19B, the machine of the invention has both the cylinders (10) and the retention elements (9) joined to only one of the panels (4.1), and more specifically to the panel (4.1) closest to the cutting module (A). Specifically, and in order to provide a firm and balanced securing and movement, in this case of the foods in the housings (6), the retention elements (9) have a longitudinal extension clearly less than that of said housings (6).

The extension of the retention elements (9) according to the longitudinal extension of the housings (6), and with regard to the part in contact with the foods, is defined according to a minimum extension which is also sufficient for the immobilisation of the foods in the housings. Said extension of the retention elements (9) according to the part in contact with the foods is preferably between 2 cm and 15 cm, more preferably between 5 cm and 13 cm, and even more preferably between 6 cm and 10 cm.

Likewise, the contact between the retention elements (9) and the foods is established with locations close to the end openings of the cavities defined in the housings (6); in other words, in correspondence with ends closer to the cutting module (A).

This limitation in the extension of the retention elements (9) according to the part in contact with the foods provides an immobilisation of the foods in locations close to the cutting element (1) such that straight, flat and uniform cuts are obtained. In addition, said limitation provides an ability to absorb irregularities inherent to the foods such that when the foods have an irregular outer surface, with indents and protrusions, the retention elements (9) exert the corresponding securing or compression on the foods effective for a proper cutting thereof.

Additionally, the present machine optionally comprises a securing element (9"), preferably one for each of the housings (6). This securing element (9") has an extension preferably smaller than the retention elements (9) according to the longitudinal extension of the housings (6), and with regard to the part in contact with the foods. Said extension of the securing elements (9") according to the part in contact with the foods is preferably between 0.5 cm and 5 cm, more preferably between 1 cm and 3 cm, and even more preferably between 1 cm and 2 cm.

Likewise, the securing element (9") arranged in correspondence with each of the housings (6) has a toothed contact surface in order to provide a securing or immobilisation of the foods. Specifically, these securing elements (9") are located between the retention elements (9) and the end openings of the cavities, as clearly visible, for example, in figures 14B, 18B, 18C, 19A and 19B.

Each of the securing elements (9") is able to be actuated in the same manner as the retention elements (9), in other words, by means of one of the cylinders (10). Each of these cylinders (10) has one of the ends joined to the rotary body (4), and more specifically to the panel (4.1) able to be located closest to the cutting element (1), and another of the ends joined to the securing elements (9"). Thus, the securing elements (9") are moved between a separated position and a close position, similar to the retracted position and the folded position of the retention elements (9), respectively, by means of the extension and retraction of the corresponding cylinders (10). The securing elements (9") and the retention elements (9) are able to be actuated independently such that they are able to be actuated simultaneously.

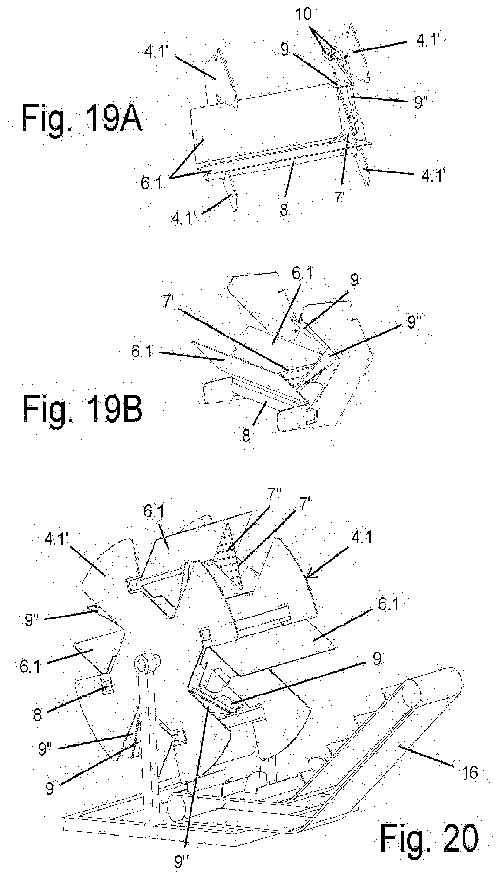

The securing elements (9") provide an ability to make more cuts for each of the foods as they are arranged closer and with a smaller extension than the retention elements (9), as is clearly visible, for example in figures 19A and 19B. Therefore, the corresponding retention element (9) is available according to the retracted position while the corresponding securing element (9") is available according to the close position in order to secure the corresponding food during the cutting thereof.

According to the rotation of the rotary body (4), the dragging projections (4.1') make the housings (6) rotate with them such that the end openings trace a 360° trajectory. Preferably, an imaginary central longitudinal axis of the cavities rotates parallel to the rotary shaft (5) and/or perpendicular to a surface of the cutting element (1) in an intermediate segment comprised between the two pulleys (2) able to be defined as a cutting point of the foods.

According to what can be seen in figures 1 to 4, 13A, 14A and 14B, the cutting point corresponds to a portion of the segment closest to the rotary body (4) of the cutting element (1) which extends according to a trajectory that is vertical or perpendicular to the rotary shaft (5), in other words with the portion which is located between the contact shaft (2') and the pulley (2) arranged further away, or less close, to the resting surface of the chassis (3), called the upper pulley.

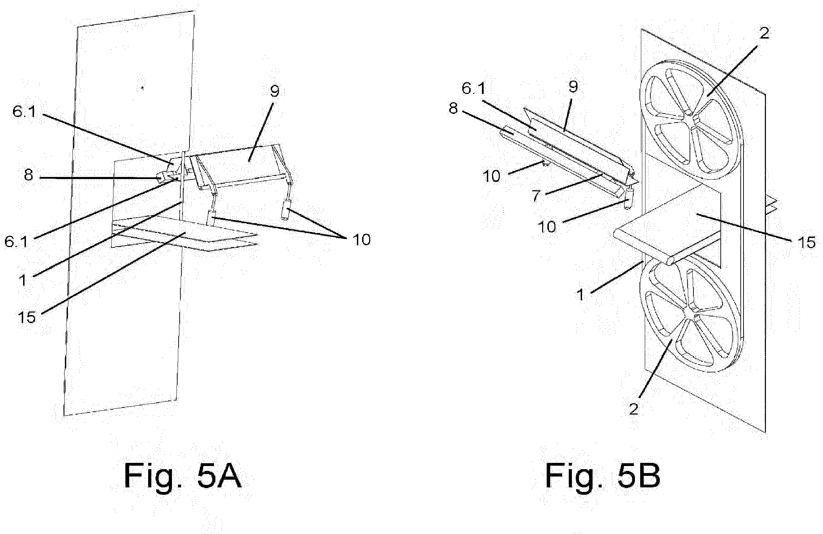

In isolation, in figures 5A and 5B the cutting element (1) and one of the housings (6) are shown together with one of the retention elements (9) and the two cylinders (10) attached to said retention element (9). In said figures, the end opening of the corresponding cavity is seen inside an angular portion of the cut, in other words, inside an angular segment of the 360° trajectory it describes which corresponds to the segment for cutting the food able to be housed in said cavity. According to what was described, the central longitudinal axis of the cavity is arranged perpendicular to the surface of the cutting element (1) axially facing said cavity.

The cutting module (A) comprises a plate (not shown for clarity). The plate can be made of a single fragment or of several fragments, joined together or not. Said plate is arranged such that it acts, by contact, as an axial stop for the food longitudinally moveable through the cavity through the end opening by means of the advance element (7).

The plate is arranged such that it covers at least one angular segment of the circumference described by the open ends of the cavities. According to this, the plate is arranged such that a separation measurement of the latter with respect to the cutting element (1) in the angular cutting portion defines, in terms of thickness, the cut portions of the foods. Additionally, the plate defines a passage for the cut portions such that they are detachable from the rest of the food still located in the corresponding cavity.

The plate additionally covers another angular segment immediately before the previously described angular segment, according to the direction of rotation of the rotary body (4). In this other angular segment, the plate likewise acts as an axial stop in the movements of the food housed in the cavities. In this manner, the food housed in each of the cavities is moved by the advance elements (7) until it abuts against the plate such that it is arranged for the cutting thereof according to the previously determined cutting thickness, preventing the accidental and unwanted fall or outlet of the foods as a consequence of these movements prior to the cutting.

The plate can cover all of the 360° described by the end openings of the cavities in order to act as axial stop, with the exception of the angular segment for locating the passage for the portions after being cut, in order to prevent the accidental and unwanted fall or outlet of the foods through said end openings.

Additionally, the plate, at least in the part or fragment in correspondence with the cutting element (1), is arranged in an adjustable manner at a distance with respect to the cutting element (1) such that the thicknesses of the portions to be cut are able to be determined and are variable.

The loading module (B) comprises a compressor, a supply tube and ducts. The compressor is arranged in order to supply pressurised air to the rotary shaft (5) through the supply tube. According to this, the compressor is connected to the rotary shaft (5), preferably to a free end of the rotary shaft (5) which is opposite from the location of the claw coupling, and the rotary shaft (5) is hollow in order to receive the supply of pressurised air in an internal part thereof.

The loading module (B) additionally comprises a connector for establishing the connection between the rotary shaft (5) and the supply tube, enabling a relative rotation of the rotary shaft (5) with respect to the supply tube such that it prevents the rotation or twisting of the supply tube when the rotary shaft (5) rotates.

Additionally, the ducts (not shown for clarity) communicate said internal part of the rotary shaft (5) with the cylinders (10) and the advance elements (7) such that they are movable by the action of the pressurised air supplied by the compressor.

Specifically, as is evident from the view, for example, of figures 1 to 4, 7B, 8B, 18C and 19B, the pressurised air is supplied by means of the ducts from the rotary shaft (5) to the rails (8) in order to actuate the advance elements (7) such that they are moved longitudinally. According to this, by means of the ducts, pressurised air is able to be supplied according to both ends of the rails (8).

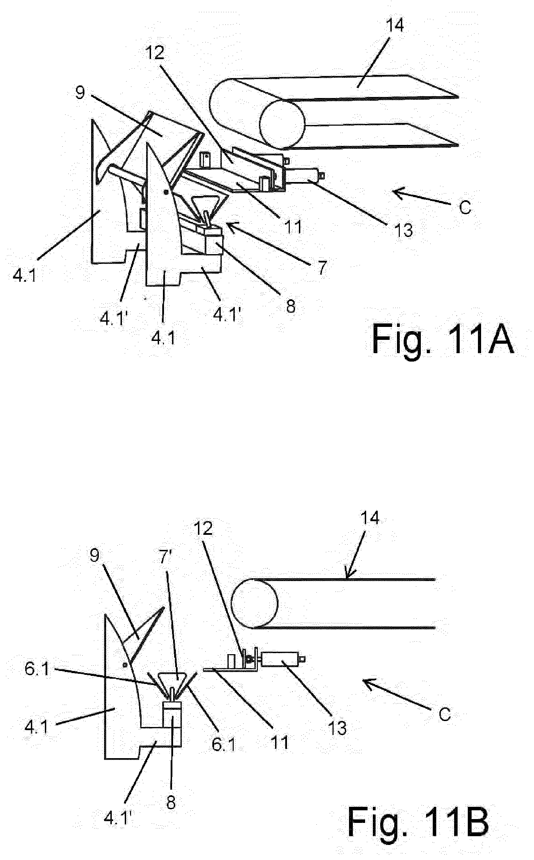

The machine of the invention additionally comprises feed means (C). The feed means (C) comprise a receiving surface (11) for receiving the foods to be cut, a translation element (12) arranged in a moveable manner and at least one actuator (13). Each of the actuators (13) is preferably pneumatic such that it is fed by the compressor through at least one of the ducts. Each of the actuators (13) is actuated in order to actuate the translation element (12) such that it is moved. The arrangement of the receiving surface (11), the translation element (12) and the actuators (13) with respect to the rotary body (4) defines a loading area. The loading area is schematically represented by figures 11A and 11B.

According to this, the translation element (12) is configured to exert the movement of the foods deposited on the receiving surface (11) such that they are removed from said surface (11) and are deposited in the housings (6). The supply means (C) may additionally comprise barriers arranged delimiting a perimeter on the receiving surface (11) and/or the loading module (B) may additionally comprise a casing with an introduction opening, such that the movement of foods towards the housings (6), and more specifically to the cavities thereof, is limited. Preferably, the feed means (C) and/or the loading module (B) are configured for the movement of the foods such that one of the foods is housed in each of the cavities by the action of the translation element (12).

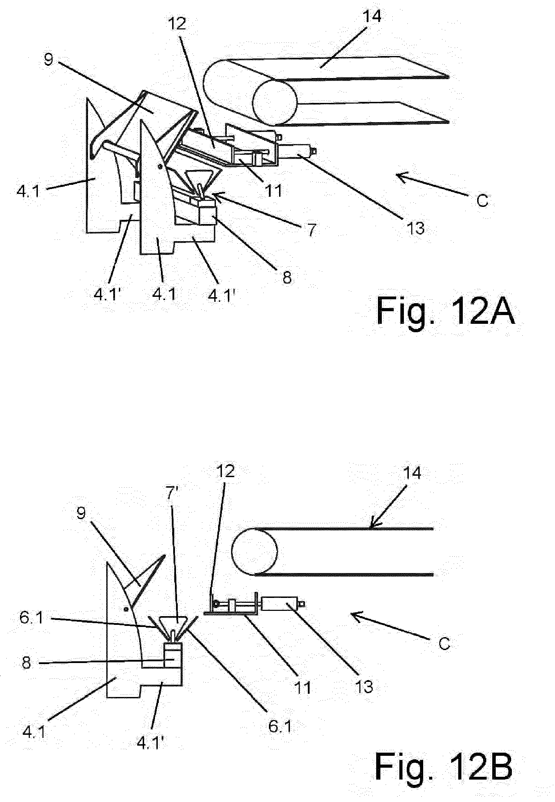

Figures 11A and 11B show the translation element (12) retracted such that the receiving surface (11) is free to receive the foods to be cut. Figures 12A and 12B, on the other hand, show the translation element (12) extended such that one of the foods that has been able to be deposited on the receiving surface (11) has been moved towards the housing (6) arranged facing it.

The feed means (C) additionally comprise a continuous transportation element (14), such as a conveyor belt or band, for supplying the foods to the loading area in a continuous manner. Preferably, the continuous transportation element (14) is configured to supply the foods to be cut to the receiving surface (11), and more preferably one at a time.

According to the option of the feed means (C) shown, for example, by figures 11A, 11B, 12A and 12B, the corresponding actuators (13) are arranged in order to linearly move the translation element (12) between a withdrawn position and an extended position by means of the extension and shortening thereof. In this manner, the foods are supplied by the continuous transportation element (14) to the receiving surface (11), whereon they fall in order to be moved to the housings (6) by means of the extension of the actuators (13), and therefore of the movement of the translation element (12) moving closer to the rotary body (4).

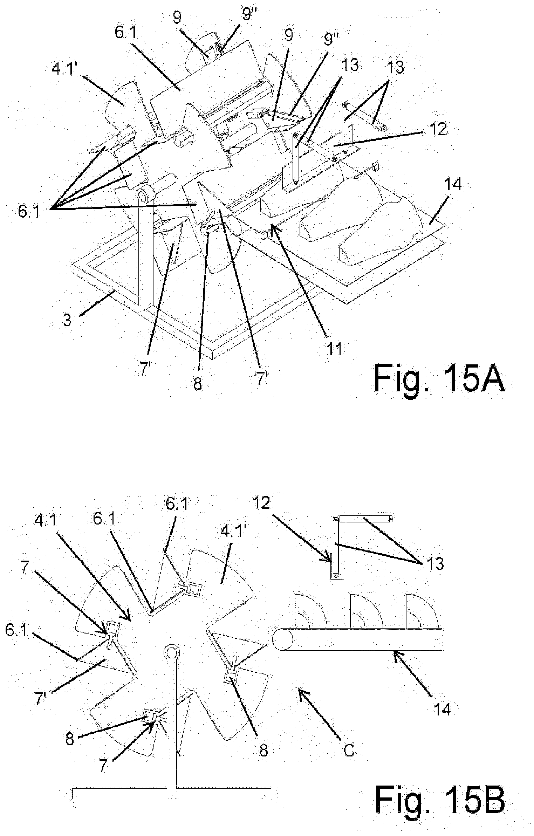

According to the option of the supply means (C) shown, for example, by figures 15A, 15B, 16A, 16B, 17A and 17B, at least one of the actuators (13) is arranged parallel, or substantially parallel, to said receiving surface (11) in order to move the translation element (12) closer and farther away with respect to the loading module (B) or the rotary body (4). Likewise, at least one other of the actuators (13) is arranged perpendicular, or substantially perpendicular, to said receiving surface (11) in order to move the translation element (12) closer and farther away with respect to said receiving surface (11). According to this option, the receiving surface (11) corresponds to a longitudinal end of the continuous transportation element (14) located in proximity to the rotary body (4).

Figures 15A and 15B show the translation element (12) as retracted or withdrawn. According to this withdrawn position, both the actuators (13) arranged parallel, or substantially parallel, to said receiving surface (11) and the actuators (13) arranged perpendicular, or substantially perpendicular, to said receiving surface (11) are shortened. Likewise, according to the withdrawn position of the translation element (12), the foods are movable to the receiving surface (11), or said longitudinal end of the continuous transportation element (14), below said translation element (12).

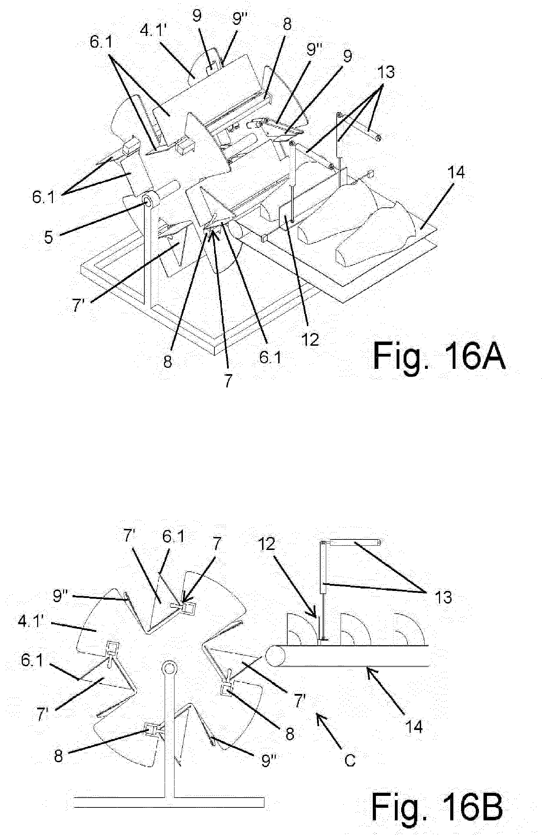

According to the extension only of the corresponding actuators (13) arranged perpendicular, or substantially perpendicular, to said receiving surface (11), the translation element (12) is able to be arranged between two of the foods to be moved to the housings (6), as seen in figures 16A and 16B.

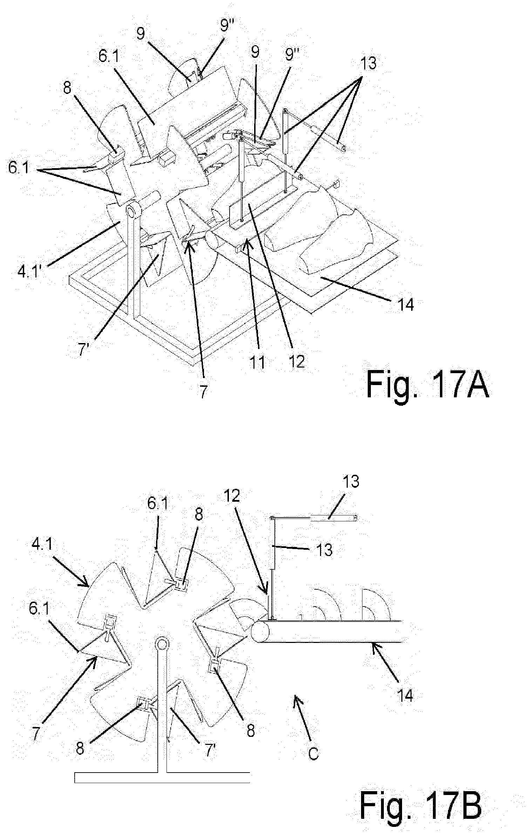

Figures 17A and 17B show the translation element (12) as extended. According to this extended position, both the actuators (13) arranged parallel, or substantially parallel, to said receiving surface (11) and the actuators (13) arranged perpendicular, or substantially perpendicular, to said receiving surface (11) are extended. Likewise, according to the withdrawn position of the translation element (12), the food located in correspondence with said receiving surface (11) is movable by the translation element (12) to one of the housings (6). See figures 17A and 17B.

The cutting module (A) additionally comprises a continuous carrying element (15), such as another conveyor belt or band, for the removal of the cut portions. Therefore, the continuous carrying element (15) is located in correspondence with the cutting point located according to the angular cutting portion, in other words in correspondence with the cutting element (1). In this manner, the continuous carrying element (15) is arranged in a removal area, called the upper one, of the cut portions. Thus, the cut portions which fall or are moved to one side of the plate opposite from the location of the rotary body (4), preferably through the corresponding passage defined to this end, fall on said continuous carrying element (15) in order to be transported to a receiving point for said cut portions.

As is directly and unequivocally seen in figures 1 to 4, 5A and 13A, the cutting point is in suspension, in other words the corresponding food is supported such that it is raised or spaced with respect to the continuous carrying element (15) during the cutting thereof by means of the cutting element (1). In this manner, a direct interaction between shavings generated in the cutting and the cut portions is prevented, in other words said shavings are not dragged by the cut portions, preventing a contamination of each of the cut portions with the shavings generated in previous cuts.

The loading module (B) additionally comprises a continuous conveyance element (16), such as another additional conveyor belt or band, for removal of some of the portions. In this manner, the continuous conveyance element (16) is arranged in a removal area, called the lower one, of the last portion of each of the cut foods. Thus, the uncut or last portions can fall, preferably only due to the effect of gravity, onto said continuous conveyance element (16) in order to be transported to a collection point for said portions.

The loading or arrangement of the foods in the cavities according to the loading area is performed with the corresponding housing (6) being in correspondence with an angular loading portion, in other words within an angular segment of the trajectory it traces which corresponds to the arrangement of the feed means (C). In other words, the angular loading portion corresponds to the angular segment of the path described by each of the housings (6) wherein the same (6) are located opposite from the translation element (12).

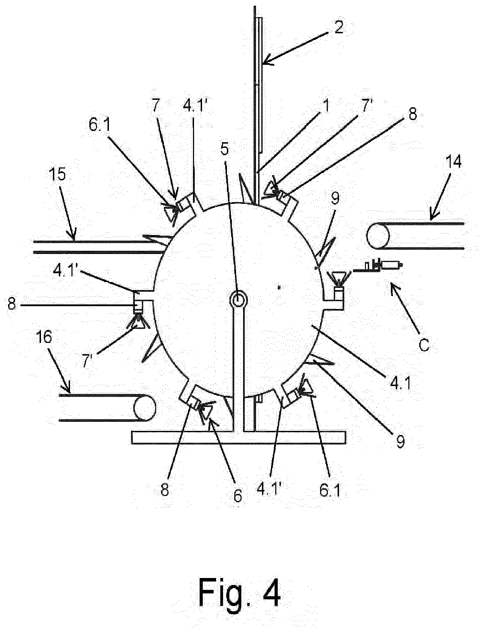

The angular loading portion preferably corresponds to a central part of the angular segment of the described trajectory which runs in a direction rotationally upwards. More preferably, and likewise more specifically, the loading is performed with the corresponding housing (6) being at a middle point of the corresponding arc defined by the upward angular movement, as seen in figure 4.

The cutting operation is carried out with the housing (6) with the food to be cut in correspondence with the angular cutting portion, as derived from figure 4. The angular cutting portion includes, according to the direction of rotation of the rotary body (4), the final part rotating in the upward direction and the initial part rotating in the downward direction of the housings (6), and more specifically of the open ends thereof. Thus, the angular cutting portion additionally includes an upper point changing from rising to falling in the rotation.

The removal of some of the portions, such as the ones selected for being the last portion of each of the foods, according to the lower removal area is performed with the corresponding housing (6) being in correspondence with an angular outlet portion, in other words, within an angular segment of the trajectory it describes which corresponds to the arrangement of the continuous conveyance element (16).

The angular outlet portion, preferably, corresponds to a part of the angular segment of the trajectory described which runs in a direction rotationally downwards, and more specifically between a middle point of the corresponding arc defined by the downward angular movement and a lower point changing from falling to rising, as seen in figure 4. In this manner, the last portion of each of the foods falls by gravity to the continuous conveyance means (16) after prior release thereof when the retention element (9) is arranged according to the retracted position.

Likewise, as seen in figure 19B, at least one last cut is made to each of the foods with the retention element (9) being in accordance with the retracted position and the securing element (9") being in accordance with the lowered or close position. In this manner, the last portion of each of the foods falls by gravity to the continuous conveyance means (16) after prior release thereof when the securing element (9") is additionally arranged according to the separated position. See figure 20.

The automated food cutting machine additionally comprises sensor means, not shown in the figures. The sensor means may comprise sensor units for detecting linear positions, angular positions, linear movements, angular movements, or any combination thereof. These sensor means can use presence sensors, proximity sensors, etc. Said sensor means can use laser technology, infrared signals or comprise gyroscopes with one, two or three axes. Likewise, the sensor means can establish detections by means of physical contacts.

The sensor means are additionally configured to generate and emit a signal depending on the detections made. These signals are received and processed by a control unit comprised in the machine of the invention. The control unit is configured to manage the operation of the automated food cutting machine.

In this manner, said control unit is configured to, depending on the signals received, act such that a continuous rotation of the rotary body (4) is maintained, the removal of the last portion of each of the foods as they are generated and according to said rotation such that the cavity of the corresponding housing (6) remains free or empty and the arrangement of the food to be cut in each of the housings (6) as it remains empty or free and before moving through the angular cutting portion according to said rotation, in addition to a continuous movement of the cutting element (1) such that it is in an arrangement to cut continuously.

The sensor means detect the location of the advance element (7) at the end point, which is able to be calibrated or selected along the rail (8). The movement of each of the advance elements (7) towards the end point is performed between the angular loading portion and the angular cutting portion, and more specifically between a point of the angular loading portion wherein the loading is performed and a point of the angular cutting portion wherein the cutting is performed, in other words between the loading and the cutting of the foods, according to the direction of rotation of the rotary body (4).

After having performed the cutting of the food, the advance element (7) being at the end point, in other words the last cut of said food, the corresponding housing (6) moves angularly in the downward direction. In this manner, said housing (6) moves until it reaches or is positioned in the angular outlet portion.

According to this, in correspondence with the angular outlet portion, the longitudinal opening of the housing (6) is free as the retention element (9) of said housing (6) is in accordance with the retracted position. Thus, the last portion of the foods is able to be removed by gravity from the corresponding cavity.

Once the control unit knows, through the corresponding signal generated and sent by the sensor means, the arrangement of the advance elements (7) at the end point and that the housings (6) have passed the point of the angular cutting portion wherein the cutting is performed, said control unit acts such that the retention elements (9) are arranged according to the retracted position at least in the angular outlet portion.

In other words, the control unit is configured to arrange the retention elements (9) according to the retracted position after moving the corresponding housing (6) through the angular cutting portion, the advance element (7) thereof being at the end point and before turning or rotating to the lower point changing from falling to rising. Preferably, the plate prevents the axial or horizontal outlet of the food through the open end of the cavities.

When the present machine comprises the securing elements (9"), in correspondence with the angular outlet portion, the longitudinal opening of the housing (6) is free when the retention element (9) of said housing (6) is in accordance with the retracted position and the securing element (9") in the separated position.

Once the control unit knows, through the corresponding signal generated and sent by the sensor means, the arrangement of the advance elements (7) at the end point and that the housings (6) have passed the point of the angular cutting portion wherein the cutting is performed, said control unit acts such that the securing elements (9") are arranged according to the separated position at least in the angular outlet portion, having moved, before the last cut of the corresponding food, the retention element (9) to the retracted position.

The advance elements (7), after passing through the angular cutting portion being at the end point, are moved to the starting point so as to contribute to the outlet of the last portion of the foods through the longitudinal opening. The control unit is configured to manage or order this movement.

Said movement is additionally performed such that when the free or empty housings (6) are arranged in correspondence with the loading area, at the point of the angular loading portion wherein the loading is performed, these (6) have the advance elements (7) at the starting point in order to receive and subsequently axially move the next food through the cavity of the corresponding housing (6).

The sensor means detect the angular movement of the housings (6), the advance elements (7) being at the starting point before being arranged in correspondence with the loading area, in other words between the angular outlet portion and the angular loading portion, according to the direction of rotation of the housings (6) and the rotary body (4).

The signal generated and emitted by the sensor means as a consequence of said detection is received and processed by the control unit. The control unit is configured to, in response to said signal, actuate in order to arrange another of the foods to be cut in the free or empty cavity of the corresponding housing (6) according to the subsequent movement thereof through the angular loading portion as a consequence of the rotation of the rotary body (4).

Specifically, the control unit acts on the actuators (13) in order to be actuated, the translation element (12) being moved, positioning the next food to be cut in the free or empty cavity of the corresponding housing (6) as it passes through the point of the angular loading portion such that, in the next passage thereof through the cutting point, the corresponding housing (6) has the next food to be cut in the cavity.

According to this, with the aim of enabling the entry of the foods into the cavities, the retention elements (9) are preferably maintained according to the retracted position from the angular outlet portion, or alternatively are rearranged according to said retracted position before the passage thereof through the angular loading portion.

Between the starting point and the end point, the advance elements (7) are partially and progressively moved after each pass through the angular cutting portion. The control unit is configured to manage or order these movements.

Likewise, as already indicated, preferably, the movements of the advance elements (7) towards the end point are performed after the housings (6) have been moved by the angular loading portion and before reaching the angular cutting portion according to the direction of rotation of the rotary body (4), in other words said housings (6) being between the point of the angular loading portion wherein the loading is performed and the point of the angular cutting portion wherein the cutting is performed, both not included.

Preferably, the advance elements (7) are moved towards the end point, each of the linear movements being defined by a resistance to the advance offered by the plate. In other words, the advance elements (7) are actuated to be moved towards the end point until the movement is prevented or limited by the contact between the food of the corresponding housing (6) against the plate.

In this manner, the sensor means detect said resistance to the advance of the advance elements (7), depending on which they generate and send the corresponding signal to the control unit, the latter being configured such that according to said signal it stops acting on the advance elements (7), stopping the advance or movement thereof towards the end point.

As already indicated, the control unit is configured to arrange the retention elements (9) according to the retracted position for the selective removal of some of the portions of the foods in correspondence with the angular outlet portion, such as the ones selected because they are the last portion of each of the foods. However, the control unit is additionally configured to arrange the retention elements (9) according to the retracted position, or at least leaving the food housed in the cavity of the corresponding housing (6) free from pushing, in order to enable the partial movement of said food towards the end point due to the effect of the advance elements (7).

The same happens with the securing elements (9"), in other words the control unit is configured to arrange said securing elements (9") according to the separated position thereof for the selective removal of some of the portions of the foods in correspondence with the angular outlet portion, such as the ones selected because they are the last portion of each of the foods. However, the control unit is additionally configured to arrange the securing elements (9") according to the separated position, or at least leaving the food housed in the cavity of the corresponding housing (6) free from pushing, in order to enable the partial movement of said food towards the end point due to the effect of the advance elements (7).

The control unit is also configured to arrange the retention elements (9) according to the folded position for the cutting of the foods and the angular movement in the rotary body (4) until the removal thereof is determined according to what has been described above, in other words in order to maintain the foods immobile in the cavities.

According to what was described, the machine operates by continuously turning the rotary body (4), each of the removals of the food from the cavities being followed by an arrangement of another of the foods to be cut in the corresponding cavity before passing through the cutting point and a portion being generated in each movement of the cavities through the cutting point. Therefore, the cutting machine of the invention is continuously and automatically fed and loaded with the foods to be cut such that it operates continuously and automatically, without stops or human intervention.

## Claims

1. An automated food cutting machine, **characterised in that** it comprises:
- a cutting element (1) arranged defining a cutting point;
- a rotary shaft (5) arranged in order to receive a rotary drive;
- a rotary body (4) arranged joined to the rotary shaft (5) in order to rotate together;
- at least one housing (6), preferably several housings, joined to the rotary body (4) radially spaced with respect to the rotary shaft (5) such that by the rotation of the rotary body (4) it is able to be positioned facing the cutting point;
- a cavity defined in each of the housings (6) for housing the products, the cavity being defined with an end opening for the passage of the foods and a longitudinal opening for depositing and removing the food;
- an advance element (7) for each of the housings (6), the advance element (7) being arranged in order to move through the cavity so that it is able to be positioned at a starting point to receive the foods in the cavity and able to be moved to an end point in order to drag the foods towards the end opening;
- feed means (C) for arranging the foods in the housing (6);
- a control unit configured to actuate the feed means (C) with the advance element (7) being at the starting point and moving the advance element (7) between the starting point and the end point;
such that, the arrangement and cutting of the foods is able to be performed in a continuous and automated manner.

2. The machine according to claim 1, **characterised in that** it comprises a retention element (9) for each of the housings (6), the retention element (9) being able to be actuated in order to move between a folded position, wherein it is arranged close to the cavity of the housing (6) in order to establish an immobilisation of the food housed in the cavity, and a retracted position, wherein it is arranged less close to the cavity of the housing (6) in order to establish a freedom of movement of the food housed in the cavity.

3. The machine according to claim 1 or 2, **characterised in that** it additionally comprises drive means with a rotary drive shaft and a claw coupling arranged joining one end of the rotary shaft (5) and one end of the rotary drive shaft for transmission of the rotation provided by the drive means to the rotary shaft (5).

4. The machine according to any one of the preceding claims, **characterised in that** it additionally comprises a plate arranged in order to establish an axial stop of the foods housed in the cavities of the housings (6) such that it defines the thickness of the cuts of the foods.

5. The machine according to claim 4, **characterised in that** the plate in correspondence with an angular cutting portion is adjustable in distance with respect to the cutting element (1) such that the thicknesses of the cuts of the foods are selectable.

6. The machine according to any one of claims 4 or 5, **characterised in that** the advance elements (7) are configured to be moveable according to partial movements towards the end point, the partial movements being defined by a resistance to the advance established by the plate.

7. The machine according to any one of the preceding claims, **characterised in that** the rotary shaft (5) has a hollow internal part for receiving a supply of pressurised air.

8. The machine according to claim 7, **characterised in that** it comprises a supply tube for supplying the pressurised air to the hollow internal part of the rotary shaft (5) and a connector for establishing the connection between the rotary shaft (5) and the supply tube, enabling a relative rotation of the rotary shaft (5) with respect to the supply tube.

9. The machine according to claim 7 or 8, **characterised in that** it comprises ducts for supplying the pressurised air from the hollow internal part of the rotary shaft (5) to each of the advance elements (7) in order to be moved between the starting point and the end point.

10. The machine according to any one of the preceding claims, **characterised in that** it additionally comprises feed means (C) configured to receive the foods and be able to be actuated such that they deposit the foods in the cavities of the housings (6).

11. The machine according to any one of the preceding claims, **characterised in that** it additionally comprises sensor means configured to detect the angular movement of the housings (6) with the advance elements (7) at the starting point.

12. The machine according to claim 11, **characterised in that** it additionally comprises a control unit configured to arrange one of the foods to be cut in the cavity of the housings (6) according to the detection.

13. The machine according to claim 11 or 12, **characterised in that** the sensor means are configured for another detection of the opposite passage of the housings (6) through the cutting point, the advance elements (7) being at the end point.

14. The machine according to claim 13, **characterised in that** the control unit is configured to move the retention elements (9) to the retracted position according to the other detection such that the food able to be housed in the housing (6) is free to come out of the cavity due to the effect of at least gravity.

15. The machine according to any one of the preceding claims, **characterised in that** it additionally comprises a securing element (9") for each of the housings (6) between the retention element (9) and the end opening, the securing element (9") being able to be actuated in order to move between a close position, wherein it is arranged close to the cavity of the housing (6) in order to establish an immobilisation of the food housed in the cavity, and a separated position, wherein it is arranged less close to the cavity of the housing (6) in order to establish a freedom of movement of the food housed in the cavity.

## Patentansprüche

1. Automatisierte Lebensmittelschneidmaschine, **dadurch gekennzeichnet, dass** sie Folgendes umfasst:
- ein Schneidelement (1), das so angeordnet ist, dass es einen Schneidpunkt definiert;
- eine Drehwelle (5), die zum Aufnehmen eines Drehantriebs angeordnet ist;
- einen Drehkörper (4), der verbunden mit der Drehwelle (5) angeordnet ist, um sich gemeinsam zu drehen;
- mindestens ein Gehäuse (6), vorzugsweise mehrere Gehäuse, die mit dem Drehkörper (4) verbunden sind und in Bezug auf die Drehwelle (5) radial beabstandet sind, so dass durch die Drehung des Drehkörpers (4) dieser in der Lage ist, so positioniert zu werden, dass er dem Schneidpunkt zugewandt ist;
- einen Hohlraum, der in jedem der Gehäuse (6) definiert ist, zum Unterbringen der Produkte, wobei der Hohlraum mit einer Endöffnung für den Durchgang der Lebensmittel und einer Längsöffnung zum Ablegen und Entfernen des Lebensmittels definiert ist;
- ein Vorschubelement (7) für jedes der Gehäuse (6), wobei das Vorschubelement (7) so angeordnet ist, dass es sich durch den Hohlraum bewegt, so dass es in der Lage ist, an einem Startpunkt positioniert zu werden, um die Lebensmittel in dem Hohlraum aufzunehmen, und in der Lage ist, an einen Endpunkt bewegt werden, um die Lebensmittel zu der Endöffnung zu ziehen;
- Einspeisungseinrichtungen (C) zum Anordnen der Lebensmittel in dem Gehäuse (6);
- eine Steuereinheit, die dazu konfiguriert ist, die Einspeisungseinrichtungen (C) zu betätigen, wenn sich das Vorschubelement (7) an dem Startpunkt befindet, und Bewegen des Vorschubelements (7) zwischen dem Startpunkt und dem Endpunkt;
so dass es möglich ist, die Anordnung und das Schneiden der Lebensmittel kontinuierlich und automatisiert durchzuführen.

2. Maschine nach Anspruch 1, **dadurch gekennzeichnet, dass** sie ein Rückhalteelement (9) für jedes der Gehäuse (6) umfasst, wobei das Rückhalteelement (9) in der Lage ist, betätigt zu werden, um zwischen einer gefalteten Position, in der es nahe bei dem Hohlraum des Gehäuses (6) angeordnet ist, um eine Immobilisierung des in dem Hohlraum untergebrachten Lebensmittels herzustellen, und einer zurückgezogenen Position, in der es weniger nahe bei dem Hohlraum des Gehäuses (6) angeordnet ist, um eine Bewegungsfreiheit des in dem Hohlraum untergebrachten Lebensmittels herzustellen, bewegt zu werden.

3. Maschine nach Anspruch 1 oder 2, **dadurch gekennzeichnet, dass** sie zusätzlich Antriebseinrichtungen mit einer Drehantriebswelle und einer Klauenkupplung umfasst, die so angeordnet ist, dass sie ein Ende der Drehwelle (5) und ein Ende der Drehantriebswelle zur Übertragung der Drehung, die durch die Antriebseinrichtung bereitgestellt wird, an die Drehwelle (5) verbindet.

4. Maschine nach einem der vorhergehenden Ansprüche, **dadurch gekennzeichnet, dass** sie zusätzlich eine Platte umfasst, die so angeordnet ist, dass sie einen axialen Anschlag der in den Hohlräumen der Gehäuse (6) untergebrachten Lebensmittel herstellt, so dass sie die Dicke der Abschnitte der Lebensmittel definiert.

5. Maschine nach Anspruch 4, **dadurch gekennzeichnet, dass** die Platte entsprechend einem winkelförmigen Schneidteil in Bezug auf das Schneidelement (1) in einem Abstand verstellbar ist, so dass die Dicken der Abschnitte der Lebensmittel wählbar sind.

6. Maschine nach einem der Ansprüche 4 oder 5, **dadurch gekennzeichnet, dass** die Vorschubelemente (7) dazu konfiguriert sind, gemäß Teilbewegungen zu dem Endpunkt bewegbar zu sein, wobei die Teilbewegungen durch einen Widerstand gegen den Vorschub, der durch die Platte hergestellt wird, definiert sind.

7. Maschine nach einem der vorhergehenden Ansprüche, **dadurch gekennzeichnet, dass** die Drehwelle (5) einen hohlen Innenteil zum Aufnehmen einer Zufuhr von Druckluft aufweist.

8. Maschine nach Anspruch 7, **dadurch gekennzeichnet, dass** sie ein Zufuhrrohr zum Zuführen der Druckluft zu dem hohlen Innenteil der Drehwelle (5) und einen Verbinder zum Herstellen der Verbindung zwischen der Drehwelle (5) und dem Zufuhrrohr umfasst, wodurch eine relative Drehung der Drehwelle (5) in Bezug auf das Zufuhrrohr ermöglicht wird.

9. Maschine nach Anspruch 7 oder 8, **dadurch gekennzeichnet, dass** sie Kanäle zum Zuführen der Druckluft von dem hohlen Innenteil der Drehwelle (5) zu jedem der Vorschubelemente (7) umfasst, damit sie zwischen dem Startpunkt und dem Endpunkt bewegt werden.

10. Maschine nach einem der vorhergehenden Ansprüche, **dadurch gekennzeichnet, dass** sie zusätzlich Einspeisungseinrichtungen (C) umfasst, die dazu konfiguriert sind, die Lebensmittel aufzunehmen und in der Lage zu sein, betätigt zu werden, so dass sie die Lebensmittel in die Hohlräume der Gehäuse (6) ablegen.

11. Maschine nach einem der vorhergehenden Ansprüche, **dadurch gekennzeichnet, dass** sie zusätzlich Sensoreinrichtungen umfasst, die dazu konfiguriert sind, die Winkelbewegung der Gehäuse (6) zu erkennen, wenn sich die Vorschubelemente (7) an dem Startpunkt befinden.

12. Maschine nach Anspruch 11, **dadurch gekennzeichnet, dass** sie zusätzlich eine Steuereinheit umfasst, die dazu konfiguriert ist, eines der zu schneidenden Lebensmittel entsprechend der Erkennung in dem Hohlraum der Gehäuse (6) anzuordnen.

13. Maschine nach Anspruch 11 oder 12, **dadurch gekennzeichnet, dass** die Sensoreinrichtungen für eine weitere Erkennung des entgegengesetzten Durchgangs der Gehäuse (6) durch den Schneidpunkt, wenn sich die Vorschubelemente (7) an dem Endpunkt befinden, konfiguriert sind.

14. Maschine nach Anspruch 13, **dadurch gekennzeichnet, dass** die Steuereinheit dazu konfiguriert ist, die Rückhalteelemente (9) gemäß der weiteren Erkennung in die zurückgezogene Position zu bewegen, so dass das Lebensmittel, das in der Lage ist, in das Gehäuse (6) untergebracht zu werden, frei ist, aufgrund der Wirkung mindestens der Schwerkraft aus dem Hohlraum auszutreten.

15. Maschine nach einem der vorhergehenden Ansprüche, **dadurch gekennzeichnet, dass** sie zusätzlich ein Sicherungselement (9") für jedes der Gehäuse (6) zwischen dem Rückhalteelement (9) und der Endöffnung umfasst, wobei das Sicherungselement (9") in der Lage ist, betätigt zu werden, um sich zwischen einer geschlossenen Position, in der es nahe bei dem Hohlraum des Gehäuses (6) angeordnet ist, um eine Immobilisierung des in dem Hohlraum untergebrachten Lebensmittels herzustellen, und einer getrennten Position, in der es weniger nahe bei dem Hohlraum des Gehäuses (6) angeordnet ist, um eine Bewegungsfreiheit des in dem Hohlraum untergebrachten Lebensmittels herzustellen, zu bewegen.

## Revendications

1. Machine automatisée pour la coupe d'aliments, **caractérisée en ce qu'**elle comprend :
- un élément de coupe (1) agencé pour définir un point de coupe ;
- un axe rotatif (5) agencé afin de recevoir un entraînement rotatif ;
- un corps rotatif (4) agencé relié à l'axe rotatif (5) afin de tourner ensemble ;
- au moins un logement (6), de préférence plusieurs logements, reliés au corps rotatif (4) radialement espacés par rapport à l'axe rotatif (5) de sorte que, par la rotation du corps rotatif (4), il puisse être positionné face au point de coupe ;
- une cavité définie dans chacun des logements (6) destinée à loger les produits, la cavité étant définie avec une ouverture d'extrémité pour le passage des aliments et une ouverture longitudinale permettant de déposer et de retirer les aliments ;
- un élément d'avance (7) pour chacun des logements (6), l'élément d'avance (7) étant agencé afin de se déplacer à travers la cavité afin qu'il puisse être positionné au niveau d'un point de départ pour recevoir les aliments dans la cavité et puisse être déplacé jusqu'à un point final afin d'entraîner les aliments vers l'ouverture finale ;
- un moyen d'alimentation (C) destiné à agencer les aliments dans le logement (6) ;
- une unité de commande configurée pour actionner le moyen d'alimentation (C) avec l'élément d'avance (7) qui est au point de départ et déplaçant l'élément d'avance (7) entre le point de départ et le point d'arrivée ;
de sorte que, l'agencement et la coupe des aliments puissent être effectuées de manière continue et automatisée.

2. Machine selon la revendication 1, **caractérisée en ce qu'**elle comprend un élément de rétention (9) pour chacun des logements (6), l'élément de rétention (9) pouvant être actionné afin de se déplacer entre une position repliée, dans laquelle il est agencé à proximité de la cavité du logement (6) afin d'établir une immobilisation de l'aliment logé dans la cavité, et une position rétractée, dans laquelle il est agencée moins près de la cavité du logement (6) afin d'établir une liberté de mouvement des aliments logés dans la cavité.

3. Machine selon la revendication 1 ou 2, **caractérisée en ce qu'**elle comprend également un moyen d'entraînement avec un axe d'entraînement rotatif et un accouplement à griffes agencé reliant une extrémité de l'axe rotatif (5) et une extrémité de l'axe d'entraînement rotatif pour la transmission de la rotation fournie par le moyen d'entraînement à l'axe rotatif (5).

4. Machine selon l'une quelconque des revendications précédentes, **caractérisée en ce qu'**elle comprend également un plateau agencé pour établir une butée axiale des aliments logés dans les cavités des logements (6) de sorte qu'elle définisse l'épaisseur des coupes des aliments.

5. Machine selon la revendication 4, **caractérisée en ce que** la plaque en correspondance avec une partie de coupe angulaire est réglable en distance par rapport à l'élément de coupe (1) de sorte que les épaisseurs des coupes des aliments puissent être choisies.

6. Machine selon l'une quelconque des revendications 4 ou 5, **caractérisée en ce que** les éléments d'avance (7) sont configurés pour être mobiles selon des mouvements partiels vers le point final, les mouvements partiels étant définis par une résistance à l'avance établie par le plateau.

7. Machine selon l'une quelconque des revendications précédentes, **caractérisée en ce que** l'axe rotatif (5) comporte une partie interne creuse destinée à recevoir une distribution d'air sous pression.

8. Machine selon la revendication 7, **caractérisée en ce qu'**elle comprend un tube de distribution pour distribuer de l'air sous pression à la partie interne creuse de l'axe rotatif (5) et un connecteur destiné à établir le raccord entre l'axe rotatif (5) et le tube de distribution, permettant une rotation relative de l'axe rotatif (5) par rapport au tube de distribution.

9. Machine selon la revendication 7 ou 8, **caractérisée en ce qu'**elle comprend des conduits destinés à distribuer l'air sous pression à partir de la partie interne creuse de l'axe rotatif (5) vers chacun des éléments d'avance (7) afin d'être déplacé entre le point de départ et le point final.

10. Machine selon l'une quelconque des revendications précédentes, **caractérisée en ce qu'**elle comprend également un moyen d'alimentation (C) configuré pour recevoir les aliments et pouvoir être actionnés de sorte qu'ils déposent les aliments dans les cavités des logements (6).

11. Machine selon l'une quelconque des revendications précédentes, **caractérisée en ce qu'**elle comprend également des moyens capteurs configurés pour détecter le mouvement angulaire des logements (6) avec les éléments d'avance (7) au niveau du point de départ.

12. Machine selon la revendication 11, **caractérisée en ce qu'**elle comprend également une unité de commande configurée pour agencer l'un des aliments à couper dans la cavité des logements (6) selon la détection.

13. Machine selon la revendication 11 ou 12, **caractérisée en ce que** les moyens capteurs sont configurés pour une autre détection du passage opposé des logements (6) à travers le point de coupe, les éléments d'avance (7) se trouvant au niveau du point final.

14. Machine selon la revendication 13, **caractérisée en ce que** l'unité de commande est configurée pour déplacer les éléments de rétention (9) vers la position rétractée selon l'autre détection de sorte que les aliments pouvant être logés dans le logement (6) soient libres de sortir de la cavité sous l'effet au moins de la gravité.

15. Machine selon l'une quelconque des revendications précédentes, **caractérisée en ce qu'**elle comprend également un élément de fixation (9") pour chacun des logements (6) entre l'élément de rétention (9) et l'ouverture d'extrémité, l'élément de fixation (9") pouvant être actionné afin de se déplacer entre une position rapprochée, dans laquelle il est agencé à proximité de la cavité du logement (6) afin d'établir une immobilisation des aliments logés dans la cavité, et une position séparée, dans laquelle il est agencé moins près de la cavité du logement (6) afin d'établir une liberté de mouvement des aliments logés dans la cavité.
